# EUROPÄISCHE PATENTANMELDUNG

(11) **EP 1 331 110 A2**
(43) Veröffentlichungstag der Anmeldung: **30.07.2003**
(21) Anmeldenummer: 02450274.2
(22) Anmeldetag: 02.12.2002
(51) Int. Cl.: B60C 27/10

(54) **Fixiervorrichtung für flexible Zugelemente**

(30) Priorität: 24.01.2002 AT 1162002; 24.01.2002 AT 1172002; 04.03.2002 AT 3342002; 04.04.2002 AT 5292002
(71) Anmelder: PEWAG AUSTRIA GmbH, A-8010 Graz (AT)
(72) Erfinder: Fleischhacker, Gerhard, 9330 Altholfen (AT)
(74) Vertreter: Matschnig, Franz

(57) **Zusammenfassung**

Die Erfindung betrifft eine Fixiervorrichtung für flexible Zugelemente (SEI), bestehend aus einem Gehäuse (GEH), durch welches das Zugelement (SEI) über Gehäuseöffnungen (GO1, GO2) in Längsrichtung (A, B) bewegbar ist, mit zumindest einem um eine Achse (AC1; AC) drehbaren Fixierelement (FI1;FI), wobei in einem Kontaktbereich zwischen dem zumindest einen Fixierelement (FI1; FI) und dem Zugelement (SEI) die Bewegungsrichtung des Zugelementes (SEI) im wesentlichen normal zu der Achse (AC1; AC) des Fixierelementes (FI1; FI) verläuft, und das Fixierelement (FI1; FI) ausgehend von einer Nullstellung (O) zumindest in einer Umfangrichtung eine Klemmfläche (KF1; KF) besitzt, mittels welcher das Zugmittel (SEI) gegen zumindest ein Gegenelement (GE1; GE) klemmbar und dadurch in einer Bewegungsrichtung (A, B) fixierbar ist, und wobei eine weitere Klemmfläche (KF2; KF') vorgesehen ist, wobei die Bewegungsrichtung des Zugelementes (SEI) in dem Kontaktbereich zwischen der weiteren Klemmfläche (KF2; KF') im wesentlichen normal zu der Achse (AC2; AC) verläuft, die Klemmfläche (KF2; KF') sich ausgehend von der Nullstellung (O) in einer zu der Umfangrichtung der ersten Klemmfläche (KF1; KF) entgegengesetzten Umfangsrichtung eines Fixierelementes (FI2; FI) erstreckt, und das Zugelement (SEI) zwischen der zweiten Klemmfläche (KF2; KF') und einem Gegenelement (GE2; GE) einklemmbar und in zu der ersten Bewegungsrichtung (A, B) entgegengesetzter Richtung (B, A) blockierbar ist, und wobei die Drehbewegung der beiden Klemmflächen (KF1, KF2; KF, KF') derart gekoppelt ist, dass in der Klemmposition der einen Klemmfläche die andere Klemmfläche aus der Klemmposition herausbewegt oder herausbewegbar ist.

## Beschreibung

Die Erfindung betrifft eine Fixiervorrichtung für flexible Zugelemente.

Bei vielen technischen Anwendungen stellt sich die Forderung nach der lösbaren Fixierung eines elastischen Zugelementes, beispielsweise eines Seiles oder Drahtes, hinsichtlich der Bewegung des Zugelementes in seiner Längsrichtung. Üblicherweise erfolgt diese Fixierung mittels einfacher Quetschverbindungen. Mit solchen bekannten Vorrichtungen ist allerdings immer nur die Blockierung der Bewegung des Zugelementes in eine Richtung möglich.

Um die Fixierung in beide Richtungen zu ermöglichen, werden daher häufig zwei solcher Vorrichtungen, welche in unterschiedliche Richtungen wirken, verwendet. Diese doppelte Verwendung erhöht sowohl die Kosten als auch die Fehleranfälligkeit. Weiters ist je nach gewünschter Blockierrichtung jeweils die entsprechende Vorrichtung zu bedienen, was sich als umständlich und zumeist auch kompliziert erweist.

Es ist eine Aufgabe der Erfindung, eine Fixiervorrichtung zu schaffen, mit welcher eine lösbare Fixierung eines elastischen Zugelementes in beide Längsrichtungen auf einfache Art und Weise möglich ist.

Diese Aufgabe wird mit einer eingangs erwähnten Fixiervorrichtung gelöst, welche bestehend aus einem Gehäuse, durch welches das Zugelement über Gehäuseöffnungen in Längsrichtung bewegbar ist, mit zumindest einem um eine Achse drehbaren Fixierelement, wobei in einem Kontaktbereich zwischen dem zumindest einen Fixierelement und dem Zugelement die Bewegungsrichtung des Zugelementes im wesentlichen normal zu der Achse des Fixierelementes verläuft, und das Fixierelement ausgehend von einer Nullstellung zumindest in einer Umfangrichtung eine Klemmfläche besitzt, mittels welcher das Zugmittel gegen zumindest ein Gegenelement klemmbar und dadurch in einer Bewegungsrichtung fixierbar ist, und wobei eine weitere Klemmfläche vorgesehen ist, wobei die Bewegungsrichtung des Zugelementes in dem Kontaktbereich zwischen der weiteren Klemmfläche im wesentlichen normal zu der Achse verläuft, die Klemmfläche sich ausgehend von der Nullstellung in einer zu der Umfangrichtung der ersten Klemmfläche entgegengesetzten Umfangsrichtung eines Fixierelementes erstreckt, und das Zugelement zwischen der zweiten Klemmfläche und einem Gegenelement einklemmbar und in zu der ersten Bewegungsrichtung entgegengesetzter Richtung blockierbar ist, und wobei in der Klemmposition der einen Klemmfläche die andere Klemmfläche aus der Klemmposition herausbewegt oder herausbewegbar ist.

Je nach Stellung der Klemmflächen wird das Seil in eine Bewegungsrichtung freigegeben, während es in der anderen Richtung fixiert ist.

Vorteilhaft ist es dabei, wenn die Drehbewegung der beiden Klemmflächen derart gekoppelt ist, dass in der Klemmposition der einen Klemmfläche die andere Klemmfläche aus der Klemmposition herausbewegt oder herausbewegbar ist, da durch die Koppelung der Drehbewegung der Klemmflächen eine einfache Bedienung gewährleistet ist, die es nicht notwendig macht, mehrere Vorrichtungen unabhängig voneinander zu bedienen.

Bei einer ersten Ausführungsform der Erfindung hat dabei genau ein Fixierelement ausgehend von einer Nullstellung in beiden Umfangrichtungen je eine Klemmfläche hat, sodass die "Koppelung" der Drehbewegung der beiden Klemmflächen einfach durch die Drehbewegung des einen Fixierelementes erfolgt, da bei einem Drehen der einen Klemmfläche in ihre klemmende Position die andere Klemmfläche aus ihrer klemmenden Position weggedreht wird.

Bei einer anderen Ausführungsform der Erfindung haben zwei Fixierelemente je eine sich ausgehend von einer Nullstellung in einander entgegengesetzte Umfangrichtungen erstreckende Klemmfläche.

Um eine zuverlässige Klemmung zu erlauben, die keine Beschädigungen an dem Zugelement verursacht, weisen die Fixierelemente exzentrische Bereiche als Klemmflächen auf.

Besonders flach lässt sich die Fixiervorrichtung gestalten, wenn das zumindest eine Fixierelement eine Scheibe ist.

In der Regel ist es ausreichend, wenn der Öffnungswinkel des exzentrischen Bereiches in eine Umfangrichtung maximal 12 ° beträgt.

Damit ein Benutzer auf einfache Weise das Zugelement mit der Fixiervorrichtung in eine Bewegungsrichtung fixieren kann, hat das zumindest eine Fixierelement einen aus dem Gehäuse herausragenden Fortsatz, mittels welchem das Fixierelement zu einer im Kontaktbereich zu dem Zugelement zu der Blockierrichtung des Zugelementes gleichgerichteten Verdrehung gegen die von zumindest einem Rückstellmittel ausgeübte Rückstellkraft verdrehbar ist.

Üblicherweise ist das zumindest eine Rückstellmittel eine Druckfeder.

Bei zwei Fixierelementen erfolgt weiters die Kopplung der Drehbewegung der beiden Klemmflächen mittels der zumindest einen Feder. Dabei ist die Feder zwischen zwei Fixierelementen eingeklemmt, wobei die Angriffspunkte des Federelementes so gewählt sind, dass die Wirklinie des Federelementes bei einem Fixierelement außerhalb des Drehpunktes und bei dem zweiten Fixierelement im wesentlichen durch den Drehpunkt verläuft.

Bei einer einfachen Ausführungsform der Erfindung mir genau einem Fixierelement ist die Feder im Inneren des Gehäuses abgestützt und die Wirklinie verläuft durch den Angriffspunkt außerhalb des Drehpunktes des Fixierelementes.

Bei einer einfachen Ausführungsform ist das zumindest eine Gegenelement in dem Gehäuse fest montiert.

Eine wesentlich bessere wird allerdings erreicht, wenn zumindest eines der Gegenelemente um eine Achse drehbar ist, welche im wesentlichen parallel zu der Drehachse des korrespondierenden Fixierelementes ist.

Weiters kann die Klemmwirkung noch gesteigert werden, wenn zumindest die Klemmfläche des Fixierelementes und/oder eine Kontaktfläche des zumindest einen Gegenelementes aus Kunststoff ist, wenn die Klemmfläche und/oder eine Kontaktfläche des zumindest einen Gegenelementes Rillen hat, oder wenn die Klemmfläche und/oder eine Kontaktfläche des zumindest einen Gegenelementes aufgeraut ist.

Im folgenden ist die Erfindung an Hand der Zeichnung näher erläutert. In dieser zeigen
- Fig. 1: eine erste Ausführungsform einer erfindungsgemäßen Fixiervorrichtung in geöffnetem Zustand,
- Fig. 2: einen Schnitt durch eine Fixiervorrichtung nach Fig. 1 entlang der Linie II-II,
- Fig. 3: eine zweite Ausführungsform einer erfindungsgemäßen Fixiervorrichtung,
- Fig. 4: die Rückseite eines Fahrzeugreifens mit montierter Fahrzeugkette,
- Fig. 5: die Vorderseite des Fahrzeugreifens nach Fig. 4 mit einer Fahrzeugkette, und
- Fig. 6: die Reifenunterseite des Fahrzeugreifens nach Fig. 4 und 5.

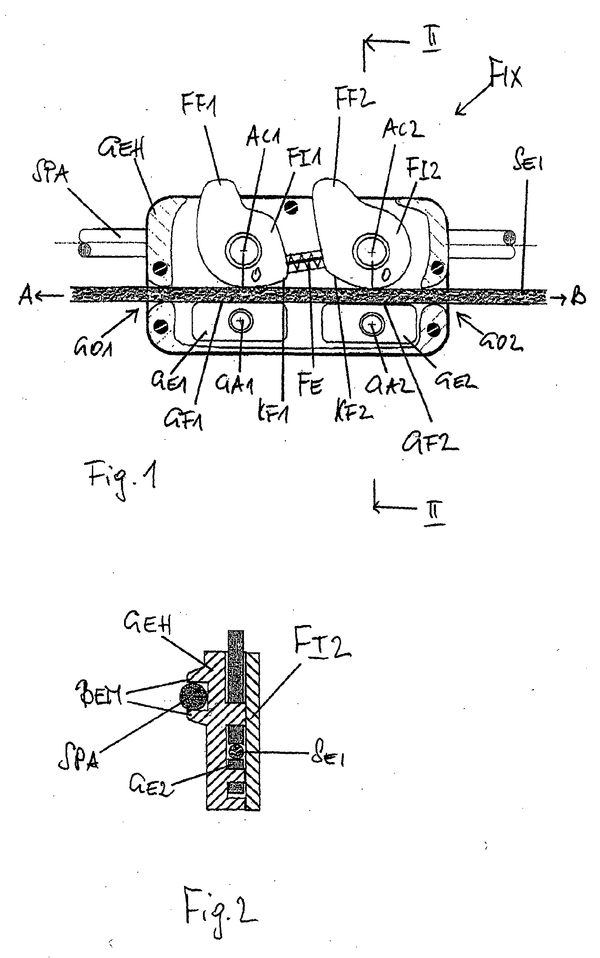

In Fig. 1 und Fig. 2 ist eine Fixiervorrichtung bestehend aus einem Gehäuse GEH gezeigt, durch welches ein elastisches Zugelement, wie etwa ein Seil oder Draht SEI geführt und in beide Richtungen verschiebbar ist. Dazu weist das Gehäuse GEH zwei Gehäuseöffnungen GO1, GO2 auf, die bei der gezeigten Darstellung an dem Gehäuse GEH im wesentlichen gegenüberliegen. Grundsätzlich müssen diese Öffnungen aber nicht gegenüberliegend angeordnet sein.

Im Inneren des Gehäuses GEH sind zwei Fixierelemente FI1, FI2 drehbar um Achsen AC1, AC2 angeordnet. Die beiden Elemente FI1, FI2 sind dabei beispielsweise auf entsprechenden, nicht dargestellten Bolzen drehbar gelagert. Die beiden Fixierelemente, FI1, FI2, die etwa scheibenförmig sind, weisen jeweils Klemmflächen KF1, KF2 auf, mit denen sie das Zugelement SEI kontaktieren können. Die Klemmflächen KF1, KF2 sind dabei in etwa kreisförmig und weisen einen exzentrischen Bereich auf, der sich entweder durch außermittige Anordnung um die Drehachse AC1, AC2 oder eine entsprechende Ausgestaltung der Kontaktoberfläche KF1, KF2 ergibt.

Die Ausrichtung der Achsen AC1, AC2 ist dabei so gewählt, dass in dem Kontaktbereich zwischen der jeweiligen Klemmfläche KF1, KF2 und dem Seil SEI die Seilrichtung im wesentlichen normal auf die Achse AC1, AC2 steht. Vorteilhaft hinsichtlich des notwendigen Bauraumes ist es weiters, wenn die beiden Achsen AC1 und AC2 wie dargestellt zueinander im wesentlichen parallel sind, grundsätzlich könnten aber die beiden Achsen AC1 und AC2 auch einen beliebigen Winkel zueinander einschließen, solange die beiden Achsen AC1 und AC2 im wesentlichen parallel zu der Seilrichtung im Kontaktbereich sind.

Jedem Fixierelement FI1, FI2 ist in der gezeigten Darstellung ein Gegenelement GE1, GE2 mit entsprechenden Kontaktflächen GF1, GF2 zugeordnet, welche auf der im wesentlichen gegenüberliegenden Seite des Seiles SEI so angeordnet sind, dass die Kontaktflächen GF1, GF2 mit dem Seil SEI in Kontakt stehen. Die beiden Gegenelemente GE1, GE2 sind um Achsen GA1, GA2 verschwenkbar, wobei die Achsen GA1, GA2 jeweils zumindest im wesentlichen parallel zu der Achse AC1, AC2 des zugeordneten Fixierelementes FI1, FI2 sind. Prinzipiell können aber die Gegenelemente GE1, GE2 auch fest in dem Gehäuse GEH angeordnet sein, bzw. kann auch nur ein Gegenelement vorgesehen sein, dass zumindest in den, den Fixierelementen gegenüberliegenden Bereichen, eine Kontaktfläche aufweist.

Das in der Fig. 1 links dargestellte Fixierelement FI1 weist nun eine Klemmfläche KF1 mit einem in Umfangrichtung exzentrischen Bereich auf, der sich ausgehend von einem in etwa kreisförmigen Bereich nach rechts erstreckt, wobei die Exzentrizität so gestaltet ist, dass der Krümmungsradius größer als im Vergleich zu dem kreisförmigen Umfang ist. An dieser Stelle sei angemerkt, dass die links und rechts angeordneten Elemente auch genau anders in dem Gehäuse angebracht sein könnten, die beschriebene Anordnung also keine Auswirkung auf die Vorrichtung hat. Entsprechend ist das zweite Fixierelemente FI2 im Bereich der Klemmfläche KF2 ausgebildet, allerdings befindet sich hier die Exzentrizität in einem sich nach links erstreckenden Bereich. Durch ein entsprechendes Verdrehen der Fixierelemente FI1, FI2 gelangt das Seil SEI in Kontakt mit den exzentrischen Bereichen der Klemmflächen KF1, KF2, wodurch es zwischen den Kontaktflächen GE1, GE2 und den Klemmflächen KF1, KF2 in Folge der entstehenden Reibung eingeklemmt wird, wie dies im folgenden noch näher erläutert wird.

Zum Freigeben des Seils in Richtung A ist vorerst das in dieser Darstellung linke Fixierelement FI1 gegen die Kraft einer Feder FE mittels eines Fortsatzes FF1 des Fixierelementes FI1, der aus dem Gehäuse GEH herausragt, zu drücken, sodass das Seil SEI für ein Ziehen in Richtung A freigegeben wird. Um anschließend das Seil SEI gegen eine Bewegung in Richtung B, die beispielsweise von einer nicht dargestellten Rückstellkraft ausgeübt wird, zu sichern, wird das rechte Fixierelement FI2 durch Drücken auf den Fortsatz FF2 im Gegenuhrzeigersinn gedreht, sodass das Seil SEI mit seiner exzentrischen Klemmfläche KF2 kontaktiert und in Folge der Reibwirkung das Seil SEI eingeklemmt wird.

Um die Bewegung des Seiles SEI in Richtung B wieder freizugeben, ist lediglich an dem Seil SEI in Richtung A zu ziehen, wodurch das rechte Fixierelement FI2 im Uhrzeigersinn mitgenommen wird und die Klemmwirkung in Richtung B dadurch aufgehoben wird, da in einem schwach oder gar nicht exzentrischen Übergangsbereich von der exzentrischen Form der Klemmfläche KF2 zu der kreisförmigen Form die Reibung abnimmt oder gar kein Kontakt mehr mit dem Seil gegeben ist.

Durch Verdrehen des linken Fixerelementes FI1 im Uhrzeigersinn kann das Seil SEI mit der exzentrischen Klemmfläche KF1 und der Kontaktfläche GF1 in Richtung A eingeklemmt werden, sodass eine Bewegung des Seiles SEI in Richtung A nicht mehr möglich ist. Bei entsprechender Koppelung des Fixierelementes FI1 mit dem zweiten Fixierelement FI2 beispielsweise über eine Feder FE kann dabei die Drehung des Fixierelementes FI1 über die Feder FE bewirkt werden, prinzipiell wäre aber auch eine Handbetätigung des Fixierelementes FI1 möglich.

Gleichzeitig wird durch die Kraft der Feder FE das linke Fixierelement FI1 im Uhrzeigersinn verdreht und das Seil SEI wird von der exzentrischen Klemmfläche KF1 und der Kontaktfläche GF1 in Richtung A eingeklemmt, sodass eine Bewegung des Seiles SEI in Richtung A nicht mehr möglich ist.

Die angesprochene Rückstellkraft wird dabei von einer Druckfeder FE erzeugt, die an beiden Fixierelementen angreift. Die Wirkachse der Feder FE verläuft dabei außerhalb der Drehachse AC1 des ersten Fixierelementes FI1 und im wesentlichen durch die Drehachse AC2 des zweiten Fixierelementes FI2. Grundsätzlich könnte aber auch für jedes Fixierelement FI1, FI2 ein eigenes Rückstellmittel etwa in Form einer Druckfeder vorgesehen sein, welches das linke Fixierelement FI1 zu einer Drehung im Uhrzeigersinn und das rechte Fixierelement FI2 zu einer Drehung im Gegenuhrzeigersinn veranlasst.

Grundsätzlich können aber natürlich beispielsweise auch entsprechend angeordnete Zugfedern oder andere Rückstellmittel verwendet werden.

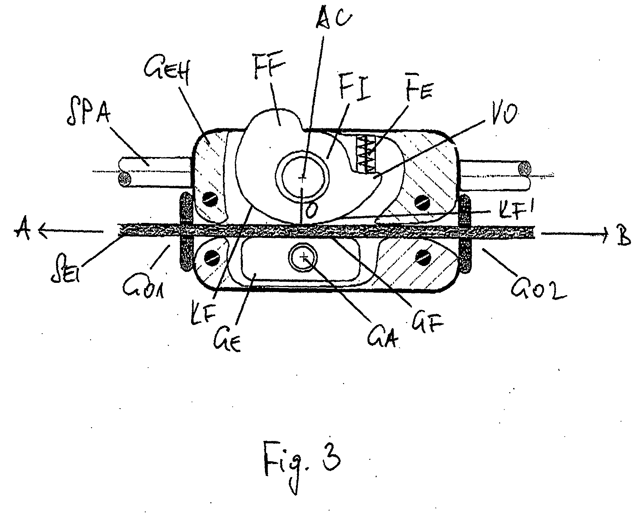

In Fig. 3 ist eine weitere Ausführungsform der Erfindung gezeigt, die mit lediglich einem Fixierelement FI1 auskommt, welches in beiden Umfangrichtungen exzentrische Klemmflächen KF, KF' aufweist. Das Fixierelement FI steht dabei unter der Kraftwirkung einer Druckfeder FE, die an einer Innenseite des Gehäuses GEH abgestützt ist und an einem Vorsprung VO des Fixierelementes FI angreift. Der Angriffspunkt ist dabei so gewählt, dass die Wirklinie der Feder außerhalb der Drehachse AC des Fixierelementes FI verläuft. Gemäß der in der Zeichnung gezeigten Ausführungsform veranlasst dabei die Feder FE das Fixierelement zu einer Drehung im Uhrzeigersinn; grundsätzlich kann die Feder aber auch so angeordnet sein, dass sie das Fixierelement FI zu einer Drehung im Gegenuhrzeigersinn veranlasst, die folgenden Erläuterungen hinsichtlich der Blockierung des Seiles in Richtung A oder B sind dann umgekehrt zu denken.

In seiner "Ruheposition" befindet sich in Folge der Federwirkung der Feder FE das Fixierelement FI in einer Position, in welcher das Seil SEI zwischen dem Gegenelement GE bzw. dessen Kontaktfläche GF und der rechten exzentrischen Klemmfläche KF' des Fixierelementes FI eingeklemmt ist. Wirkt nun beispielsweise eine Kraft auf das Seil in Richtung A, wie dies später noch kurz näher erläutert wird, so ist durch diese Klemmwirkung ein Herausziehen des Seiles SEI zuverlässig verhindert.

Soll nun das Seil SEI in Richtung A bewegt werden, so wird durch Drücken auf einen aus dem Gehäuse GEH herausragenden Fortsatz FF des Fixierelementes FI dieses zu einer Drehbewegung im Gegenuhrzeigersinn gegen die Rückstellkraft der Feder FE veranlasst, und zwar in eine Position, in der die Reibung zwischen dem Seil SEI und den Klemmfläche KF, KF' des Fixierelementes FI minimiert oder vollständig eliminiert ist. Dazu wird das Fixierelement FI etwa so weit gedreht, dass sich der Übergangsbereich zwischen den beiden exzentrischen Klemmflächen KF, KF' dem Seil SEI gegenüber befindet.

Das Seil SEI kann nun in Richtung A gezogen werden, wobei dies bei vielen Anwendungen, etwa im Zusammenhang mit Gleitschutzketten, gegen eine Rückstellkraft erfolgt. Damit das Seil SEI in der ausgezogenen Position nach einem Loslassen nicht wieder durch das Gehäuse hindurch zurückgezogen wird, wird das Fixierelement FI weiter im Gegenuhrzeigersinn gegen die Rückstellkraft der Feder FE gedrückt, bis die exzentrische linke Seite der Klemmfläche KF das Seil SEI kontaktiert. In Folge der Reibung wird bei einem Auslassen des Seiles SEI dieses von dem Fixierelement FI gehalten, wobei sich üblicherweise das Seil - in Abhängigkeit von den Dimensionen der gesamten Vorrichtung - noch einige Millimeter in Richtung B bewegen kann, wodurch das Fixierelement FI noch etwas weiter im Gegenuhrzeigersinn gedreht und der Kontaktbereich zwischen Seil SEI und Klemmfläche KF noch vergrößert wird, wodurch die Klemmwirkung noch weiter erhöht wird.

Um das Seil SEI aus der in Richtung B fixierten Position zu lösen, ist lediglich ein kurzes Ziehen an dem Seil in Richtung A notwendig, wodurch das Fixierelement FI zu einer Drehbewegung im Uhrzeigersinn veranlasst und die Klemmwirkung in Richtung B aufgehoben wird. Wirkt wie oben bereits angeführt eine Rückstellkraft auf das Seil SEI in Richtung B, so wird durch diese das Seil in Richtung B gezogen.

Durch die Wirkung der Feder FE wird dabei das Fixierelement FI weiter im Uhrzeigersinn gedreht, sodass nun die rechte exzentrische Klemmfläche KF das Seil SEI einklemmt, sodass eine Bewegung des Seiles in Richtung A nicht mehr möglich ist (Ausgangsposition).

Wie bereits erwähnt, kann/können das/die Gegenelement(e) fest in dem Gehäuse GEH montiert sein. Hinsichtlich der erzielbaren Reibwirkung zwischen dem Seil und den Kontaktflächen in eingeklemmtem Zustand ist es allerdings günstiger, wenn die Gegenelemente GE1, GE2, GE jeweils um eine Achse GA1, GA2, GA, welche im wesentlichen parallel zu der Drehachse des jeweils zugeordneten Fixierelementes verläuft, an einem Bolzen oder ähnlichem drehbar gelagert sind.

Grundsätzlich ist das Gehäuse GEH der erfindungsgemäßen Vorrichtung geschlossen, um das Eindringen von Schmutz, Wasser etc. zu verhindern. Allerdings kann auch vorgesehen sein, dass das Gehäuse GEH wie in der Zeichnung dargestellt teilweise offen ist, falls dies aus bestimmten Gründen vorteilhaft oder günstig ist.

Die Gehäuseöffnungen GO1, GO2 können mit Anschlussstutzen, in denen das Seil SEI noch ein Stück geführt ist, versehen sein, oder sie weisen elastische Abdeckungen auf, damit ein Benutzer vor Verletzungen eines rasch in das Gehäuse ein- bzw. durch dieses durchgezogenes Seiles geschützt ist. Vorteilhaft kann es auch sein, wenn die Gehäuseöffnungen GO1, GO2 abgerundet sind, um das Seil vor Beschädigungen bei unterschiedlichen Ausziehrichtungen zu schützen.

Um die Reibung weiter zu erhöhen und somit die Fixierung des Seiles noch zu verbessern, ist es von Vorteil, wenn die Klemmflächen eine raue Oberfläche aufweisen und/oder Rillen aufweisen. Vorteilhaft ist es in diesem Sinne weiters, wenn die Klemmflächen aus Kunststoff hergestellt sind.

Die Vorrichtung bzw. einzelne Teile können grundsätzlich jeweils wahlweise aus Metall, Kunststoff oder Verbundwerkstoff sein.

Die exzentrischen Bereiche erstrecken sich auf einem Kreissektor ausgehend von einer Nullstellung O von 0 ° - 12 °, bei der Ausführung nach Fig. 1 zu beiden Seiten der Nullstellung.

Das Gehäuse GEH ist schließlich noch mit Befestigungsmitteln BEM versehen, mittels welchen diese an einer Stützkonstruktion, etwa einer Gleitschutzkette für Fahrzeuge, d. h. etwa an einem Laufnetz dieser Kette bzw. einem Spannring SPA der Kette, befestigbar ist.

Solche oben beschriebenen Fixiervorrichtungen eignen sich besonders gut zum Einsatz mit Gleitschutzkette, da die Fixiervorrichtung ein Zugelement in beide Richtungen lösbar blockieren kann und außerdem das Lösen einer Fixierung des Zugelementes auf einfache und komfortable Weise möglich ist.

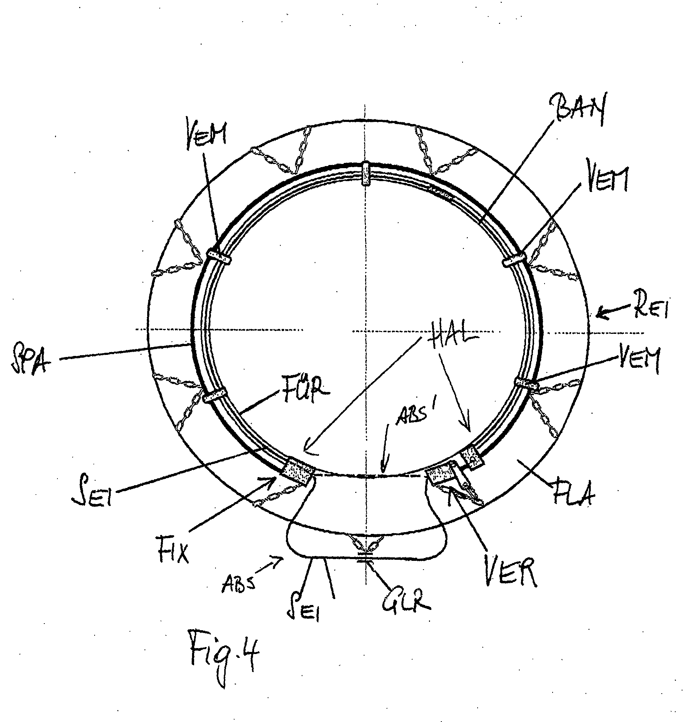

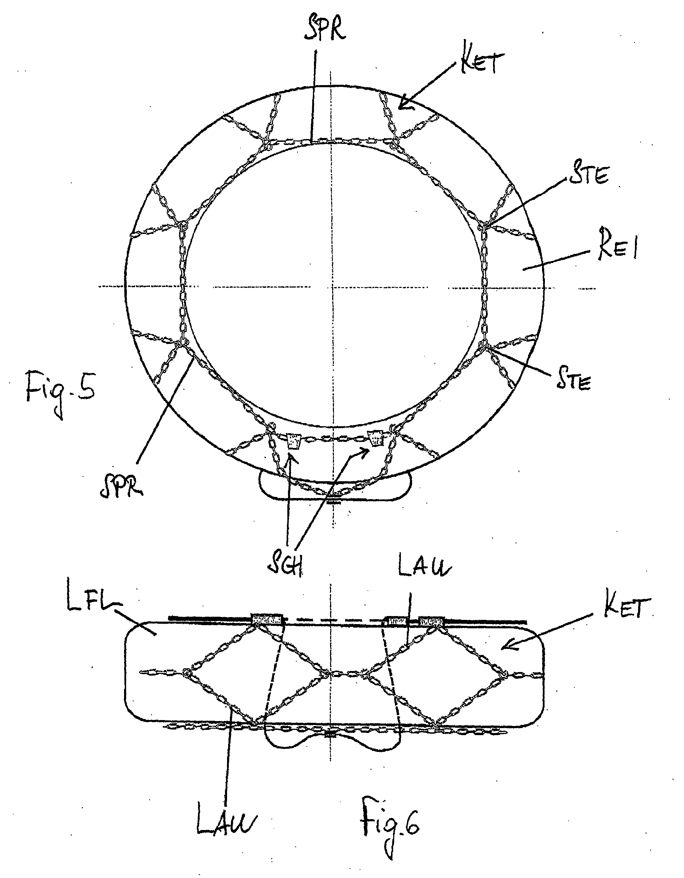

In den Figuren 4 - 6 ist ein Reifen REI mit einer montierten Fahrzeugkette KET, beispielsweise einer Schneekette, gezeigt. Die Kette KET besteht aus einer aus einer Verbindung von einzelnen Kettensträngen bzw. -gliedern gebildeten Laufkette LAU, die in montiertem Zustand im wesentlichen auf der Lauffläche LFL des Reifens REI aufliegt. Für einen stabilen und sicheren Sitz ist die Kette KET in montiertem Zustand bekannterweise sowohl an der Reifenaußenseite als auch an der Reifeninnenseite zu spannen. Dazu ist - wie Figur 5 zu entnehmen - die Laufkette LAU an ihrer Außenseite mit einer Spannvorrichtung, beispielsweise mit einer Spannkette SPR, an mehreren Stellen STE verbunden, und die im wesentlichen in Reifenumfangsrichtung verlaufende Spannkette SPR wird nach dem Anlegen mit einer entsprechenden, bekannten Schließvorrichtung SCH geschlossen.

Damit die Kette KET auf dem Reifen REI gespannt ist, ist weiters noch ein Spannen der Kette auf der Innenseite des Reifens REI notwendig. Bei herkömmlichen Gleitschutzketten mit bekannten Halte- bzw. Spannvorrichtungen an der Innenseite des Reifens, d. h. an einer inneren, dem Fahrzeug zugewandten Flanke FLA des Reifens, besteht dabei immer das Problem, dass zum Schließen der Spannvorrichtung hinter den Reifen gegriffen werden muss. Dies ist aus vielen Gründen nachteilig. Bei den meisten Fahrzeugen ist es sehr schwer, mit einer oder mehreren Händen hinter den Reifen zu greifen, und außerdem besteht die Gefahr einer Beschmutzung des Benutzers.

Bei der erfindungsgemäßen Gleitschutzkette hingegen ist ein solches Greifen auf die Rückseite des Reifens nicht mehr notwendig, wie dies im folgenden näher läutert ist.

Wie weiter der Figur 4 zu entnehmen ist, besteht die im wesentlichen in Reifenumfangrichtung an der Reifeninnenseite verlaufende, an dem Laufnetz LAU der Gleitschutzkette KET befestigte innere Haltevorrichtung HAL im wesentlichen aus einem flexiblen Zugelement SEI, beispielsweise einem Seil, das über entsprechende Verbindungsmittel VEM - wie weiter unten noch näher erläutert - mit der Laufkette LAU verbunden ist. Neben diesem flexiblen Zugelement SEI weist die innere Haltevorrichtung HAL noch eine Fixiervorrichtung FIX für das Zugelement SEI sowie eine Verschlussvorrichtung VER auf, die mit der Laufkette LAU verbunden ist.

Ausgehend von der Verschlussvorrichtung VER verläuft die innere Haltevorrichtung HAL über einen großen Bereich des Umfangs des Reifens, etwa wie in der Figur 1 über einen Bereich von mehr als 320 °. Das Zugelement SEI ist dort schließlich entlang seiner Längsrichtung verschieblich durch eine Fixiervorrichtung FIX geführt, welche ebenfalls mit dem Laufnetz LAU der Kette KET verbunden ist. Mit seinem zweiten, außerhalb der Fixiervorrichtung FIX liegenden Ende ist das Zugelement SEI in der Verschlussvorrichtung VER arretierbar, sodass die Haltevorrichtung HAL geschlossen werden kann.

Wie in Figur 4 dargestellt, ist das Zugelement SEI vorzugsweise in einem elastischen, aber relativ formstabilen Führungsrohr FÜR geführt, damit eine gewisse stabile Gestalt der Haltevorrichtung HAL gegeben ist. Das Führungsrohr FÜR ist an einem Spannring SPA, wie er von herkömmlichen Haltevorrichtungen bekannt ist, angebracht, welcher wiederum mit der Laufkette LAU verbunden ist. Der Spannring erstreckt sich dabei allerdings nicht wie diesen bekannten Haltervorrichtungen über den gesamten Umfang, sondern lediglich über ein relativ großes Kreissegment, das sich zwischen der Verschlussvorrichtung VER und der Fixiervorrichtung FIX erstreckt.

Die Verbindung Führungsrohr FÜR - Verschlusseinrichtung VER ist bei der gezeigten Ausführungsform über den Spannring SPA gegeben, es kann aber auch das Führungsrohr unmittelbar mit der Verschlusseinrichtung VER verbunden sein, da grundsätzlich ein solcher Spannring SPA nicht notwendig ist, d.h. es kann auch das Führungsrohr FÜR - vorausgesetzt, dass es über die entsprechende Stabilität verfügt - auch unmittelbar an der Laufkette LAU angebracht sein.

Das Führungsrohr FÜR muss auch nicht - wie dargestellt - durchgehend sein, sondern kann sich auch nur in bestimmten Bereichen erstrecken.

Schließlich besteht die innere Haltevorrichtung HAL noch aus einem Speichermittel, welches das Verlängern des zwischen dem offenen Ende des Zugelementes SEI und der Fixiervorrichtung FIX liegenden Abschnittes des Zugelementes SEI erlaubt, sowie aus Rückstellmitteln, welche eine Rückstellkraft auf das Zugelement SEI derart ausüben, dass diese einem "Herausziehen" des Seiles aus der Fixiervorrichtung FIX entgegenwirken.

Bei der gezeigten Ausführungsform der Erfindung sind die Speicher- und Rückstellmittel in Form eines elastischen, flexiblen Bandes BAN ausgebildet, das einerseits mit der Laufkette LAU und andererseits mit einem ersten Ende des Zugelementes SEI verbunden ist. Dieses elastische Band BAN erlaubt es, das Zugelement an seinem freien Ende durch die Fixiervorrichtung FIX hindurch zu ziehen, sodass die Länge des Zugelementes SEI zwischen seinem freien Ende und der Fixiervorrichtung FIX vergrößert wird.

Das elastische Band BAN selbst ist mit seinem zweiten Ende in bezug auf das Zugelement SEI fest angeordnet, beispielsweise ist es in dem Führungsrohr FÜR fixiert oder mit der Verschlusseinrichtung VER fix verbunden, sodass von dem Band BAN bei einem Anziehen an dem Zugelement SEI auf dieses eine Rückstellkraft ausübt wird.

Mit der Fixiervorrichtung FIX wird das ausgezogene Zugelement SEI arretiert, sodass ein Einziehen der Zugelementes SEI in Folge der Rückstellkraft des elastischen Bandes BAN verhindert ist. Mit dem freien Ende des Zugelementes SEI wird nun die innere Haltervorrichtung HAL geschlossen, indem das freie Ende des Zugelementes SEI in der Verschlussvorrichtung VER lösbar fixiert wird.

Die Gleitschutzkette KET kann nun von oben kommend über den Fahrzeugreifen REI gestülpt werden, wobei sich der Bereich der inneren Haltevorrichtung HAL mit der Fixiervorrichtung FIX und der Verschlusseinrichtung VER nach dem Aufstülpen in einem unteren Bereich des Reifens REI befindet. Aufgrund des ausgezogenen Zustandes des Zugelementes SEI steht genügend Länge des Zugelementes SEI in dem Abschnitt ABS zwischen der Fixiervorrichtung FIX und der Verschlusseinrichtung VER zur Verfügung, um diesen Abschnitt ABS des Zugelementes SEI an der Vorderseite des Reifens REI vorbei zu führen und an der Vorderseite des Reifens am Boden vor diesem zur Auflage kommen zu lassen.

Nach dem Überstülpen der Kette über den Reifen wird durch ein einfaches Ziehen an dem vor dem Reifen REI befindlichen Zugelement SEI die Fixierung des Zugelementes SEI durch die Fixiervorrichtung FIX gelöst, und das Zugelement SEI wird durch die Rückstellkraft des elastischen Bandes BAN soweit eingezogen, bis es an den Vorderrand des Reifens REI im Bereich seiner Aufstandsfläche anstößt.

Dadurch verkürzt sich die Länge des Abschnittes ABS' des Zugelementes zwischen der Fixiervorrichtung FIX und der Verschlusseinrichtung VER, wie dies in der Figur 4 mittels der strichlierten Darstellung für den verkürzten, bereits hinter den Reifen gezogenen Abschnitt ABS' des Zugelementes SEI dargestellt ist.

Durch ein kurzes Anfahren des Fahrzeuges wird anschließend durch die Drehung des Reifens REI und die Rückstellkraft des Bandes BAN das Zugelement SEI auf die Rückseite des Reifens gezogen und zieht dort die innere Haltevorrichtung HAL kreisförmig zusammen, sodass die Gleitschutzkette gespannt und zuverlässig gehalten ist.

Vorteilhaft ist es dabei, wenn in dem Bereich zwischen der Fixiervorrichtung FIX und der Verschlusseinrichtung VER die Laufkette LAU mit dem Zugelement SEI beispielsweise mittels einer oder mehreren Hülsen oder Gleitringen GLR verbunden ist, welche eine Relativbewegung der Laufkette LAU und des Zugelementes SEI zueinander erlauben, sodass bei dem Spannen und hinter den Reifen Gleiten des Zugelementes SEI auch die Laufkette LAU in diesem Bereich über die Reifenfläche gezogen wird.

Die Rückstellkraft für das Zugelement SEI wird in dem gezeigten Fall durch ein elastisches Band BAN erzeugt, welches mit einem Ende des Zugelementes SEI verbunden ist. Weiters erlaubt dieses Band BAN die "Verlängerung" des Zugelement-Abschnittes ABS, der zwischen dem freien Ende des Zugelementes SEI und der Fixiervorrichtung FIX liegt.

Ein andere Möglichkeit besteht auch darin, das gesamte Zugelement SEI als elastisches Seil auszubilden, welches sich dann durch ein Anziehen an einem Ende verlängern lässt und sich in diesem Zustand durch seine Eigenelastizität wieder zusammenzieht.

Weiters kann beispielsweise auch eine nicht dargestellte Vorrichtung vorgesehen sein, mittels welcher Zugelement-Länge aufgewickelt werden kann, wobei die Abwickelbewegung gegen eine Rückstellkraft, die beispielsweise von einer Drehspiralfeder ausgeübt wird, erfolgt, sodass nach einem Lösen der Fixierung des Zugelementes SEI durch die Fixiervorrichtung FIX diese Feder das Zugelement wieder aufwickelt.

Damit die Erfindung problemlos und zur Zufriedenheit der Anwender funktioniert, muss gewährleistet sein, dass es in keiner Phase des Montierens oder Abmontierens der Kette notwendig ist, hinter den Reifen REI zu greifen.

Wie bereits erläutert ist es nach dem Anlegen der Kette KET notwendig, die Fixiervorrichtung FIX zu lösen, sodass das Zugelement SEI eingezogen werden kann bzw. sich einziehen kann. Dies geschieht durch ein einfaches, kurzes, nach Außen gerichtetes Ziehen an dem Zugelement SEI, wodurch die Fixierung gelöst wird, wie dies ja weiter oben eingehend beschrieben wurde.

## Patentansprüche

1. Fixiervorrichtung für flexible Zugelemente (SEI), bestehend aus einem Gehäuse (GEH), durch welches das Zugelement (SEI) über Gehäuseöffnungen (GO1, G02) in Längsrichtung (A, B) bewegbar ist, mit zumindest einem um eine Achse (AC1; AC) drehbaren Fixierelement (FI1;FI), wobei in einem Kontaktbereich zwischen dem zumindest einen Fixierelement (FI1; FI) und dem Zugelement (SEI) die Bewegungsrichtung des Zugelementes (SEI) im wesentlichen normal zu der Achse (AC1; AC) des Fixierelementes (FI1; FI) verläuft, und das Fixierelement (FI1; FI) ausgehend von einer Nullstellung (O) zumindest in einer Umfangrichtung eine Klemmfläche (KF1; KF) besitzt, mittels welcher das Zugmittel (SEI) gegen zumindest ein Gegenelement (GE1; GE) klemmbar und dadurch in einer Bewegungsrichtung (A, B) fixierbar ist, und wobei eine weitere Klemmfläche (KF2; KF') vorgesehen ist, wobei die Bewegungsrichtung des Zugelementes (SEI) in dem Kontaktbereich zwischen der weiteren Klemmfläche (KF2; KF') im wesentlichen normal zu der Achse (AC2; AC) verläuft, die Klemmfläche (KF2; KF') sich ausgehend von der Nullstellung (O) in einer zu der Umfangrichtung der ersten Klemmfläche (KF1; KF) entgegengesetzten Umfangsrichtung eines Fixierelementes (FI2; FI) erstreckt, und das Zugelement (SEI) zwischen der zweiten Klemmfläche (KF2; KF') und einem Gegenelement (GE2; GE) einklemmbar und in zu der ersten Bewegungsrichtung (A, B) entgegengesetzter Richtung (B, A) blockierbar ist, und wobei in der Klemmposition der einen Klemmfläche die andere Klemmfläche aus der Klemmposition herausbewegt oder herausbewegbar ist.

2. Fixiervorrichtung nach Anspruch 1, **dadurch gekennzeichnet, dass** die Drehbewegung der beiden Klemmflächen (KF1, KF2; KF, KF') derart gekoppelt ist, dass in der Klemmposition der einen Klemmfläche die andere Klemmfläche aus der Klemmposition herausbewegt oder herausbewegbar ist.

3. Fixiervorrichtung nach Anspruch 1 oder 2, **dadurch gekennzeichnet, dass** genau ein Fixierelement (FI) ausgehend von einer Nullstellung (O) in beiden Umfangrichtungen je eine Klemmfläche (KF, KF') hat.

4. Fixiervorrichtung nach Anspruch 1 oder 2, **dadurch gekennzeichnet, dass** zwei Fixierelemente (FI1, FI2) vorgesehen sind, von denen jedes eine sich ausgehend von einer Nullstellung in einander entgegengesetzte Umfangrichtungen erstreckende Klemmflächen (KF1, KF2) aufweist.

5. Fixiervorrichtung nach einem der Ansprüche 1 bis 4, **dadurch gekennzeichnet, dass** die Fixierelemente (FI1, FI2; FI) exzentrische Bereiche als Klemmflächen (KI1, KI2; KF, KF') aufweisen.

6. Fixiervorrichtung nach einem der Ansprüche 1 bis 5, **dadurch gekennzeichnet, dass** das zumindest eine Fixierelement (FI1, FI2; FI) eine Scheibe ist.

7. Fixiervorrichtung nach Anspruch 5 oder 6, **dadurch gekennzeichnet, dass** der Öffnungswinkel des exzentrischen Bereiches in eine Umfangrichtung maximal 12 ° beträgt.

8. Fixiervorrichtung nach einem der Ansprüche 1 bis 7, **dadurch gekennzeichnet, dass** das zumindest eine Fixierelement (FI1, FI2; FI) einen aus dem Gehäuse (GEH) herausragenden Fortsatz (FF1, FF2; FF) aufweist, mittels welchem das Fixierelement zu einer im Kontaktbereich zu dem Zugelement zu der Blockierrichtung des Zugelementes gleichgerichteten Verdrehung gegen die Rückstellkraft von zumindest einem Rückstellmittel (FE, FE') verdrehbar ist.

9. Fixiervorrichtung nach Anspruch 8, **dadurch gekennzeichnet, dass** das zumindest eine Rückstellmittel (FE; FE') eine Druckfeder ist.

10. Fixiervorrichtung nach Anspruch 9, **dadurch gekennzeichnet, dass** die Feder (FE) zwischen zwei Fixierelementen (FI1, FI2) eingeklemmt ist, wobei die Angriffspunkte des Federelementes (FE) so gewählt sind, dass die Wirklinie des Federelementes (FE) bei einem Fixierelement (FI1) außerhalb des Drehpunktes (AC1) und bei dem zweiten Fixierelement (FI2) im wesentlichen durch den Drehpunkt (AC2) verläuft.

11. Fixiervorrichtung nach Anspruch 9, **dadurch gekennzeichnet, dass** bei genau einem Fixierelement (FI) die Feder im Inneren des Gehäuses (GEH) abgestützt ist und die Wirklinie durch den Angriffspunkt außerhalb des Drehpunktes (AC) des Fixierelementes (FI) verläuft.

12. Fixiervorrichtung nach einem der Ansprüche 1 bis 10, **dadurch gekennzeichnet, dass** das zumindest eine Gegenelement (GE1, GE2; GE) in dem Gehäuse (GEH) fest montiert ist.

13. Fixiervorrichtung nach einem der Ansprüche 1 bis 11, **dadurch gekennzeichnet, dass** zumindest eines der Gegenelemente (GE1, GE2; GE) um eine Achse (GA1, GA2; GA) drehbar ist, welche im wesentlichen parallel zu der Drehachse (AC1, AC2; AC) des korrespondierenden Fixierelementes (FI1, FI2; FI) verläuft.

14. Fixiervorrichtung nach einem der Ansprüche 1 bis 13, **dadurch gekennzeichnet, dass** zumindest die Klemmfläche (KF1, KF2; KF) des Fixierelementes (FI1, FI2; FI) und/oder eine Kontaktfläche (GF1, GF2; GF) des zumindest einen Gegenelementes (GE1, GE2; GE) aus Kunststoff besteht.

15. Fixiervorrichtung nach einem der Ansprüche 1 bis 14, **dadurch gekennzeichnet, dass** die Klemmfläche (KF1, KF2; KF) und/oder eine Kontaktfläche (GF1, GF2; GF) des zumindest einen Gegenelementes (GE1, GE2; GE) Rillen aufweist.

16. Fixiervorrichtung nach einem der Ansprüche 1 bis 15, **dadurch gekennzeichnet, dass** die Klemmfläche (KF1, KF2; KF) und/oder eine Kontaktfläche (GF1, GF2; GF) des zumindest einen Gegenelementes (GE1, GE2; GE) aufgeraut ist.

17. Gleitschutzkette mit einem Laufnetz (LAU) und einer mit diesem verbundenen inneren Haltevorrichtung (HAL), welche in einem montierten Zustand am einer inneren Seitenflanke (FLA) eines Reifens (REI) mittels einer Verschlusseinrichtung (VER) lösbar zu einem Ring verschließbar ist, wobei das Laufnetz (LAU) in montiertem Zustand weiters an der Außenseite des Reifens (REI) von zumindest einer Haltespannvorrichtung (SPR) gespannt ist, **dadurch gekennzeichnet, dass** die innere Haltevorrichtung (HAL) zumindest abschnittsweise aus einem elastischen Zugelement (SEI) besteht, welches mit einem freien Ende (EN) in der Verschlusseinrichtung (VER) lösbar fixierbar ist, sodass die innere Haltevorrichtung (HAL) zu einem Ring geschlossen ist, und weiters die Haltevorrichtung (HAL) eine Fixiervorrichtung (FIX) nach einem der Ansprüche 1 bis 16 umfasst, wobei das Zugelement (SEI) durch das Fixierelement (FIX) in Längsrichtung (A, B) verschiebbar ist, und der zwischen der Fixiervorrichtung (FIX) und dem freien Ende (EN) des Zugelementes (SEI) befindliche Abschnitt des Zugelementes (SEI) gegen eine Rückstellkraft verlängerbar ist, und das Zugelement (SEI) zumindest in einem verlängerten Zustand mit der Fixiervorrichtung (FIX) gegen die Rückstellkraft lösbar fixierbar ist.
